(19) Europäisches Patentamt
European Patent Office
Office européen des brevets

(11) Veröffentlichungsnummer: **0 344 591 B1**

(12) # EUROPÄISCHE PATENTSCHRIFT

(45) Veröffentlichungstag der Patentschrift: **05.05.93**

(51) Int. Cl.$^5$: **C08F 220/04**, C11D 3/37

(21) Anmeldenummer: **89109326.2**

(22) Anmeldetag: **24.05.89**

(54) **Verfahren zur Herstellung von wasserlöslichen Polymerisaten und ihre Verwendung.**

(30) Priorität: **31.05.88 DE 3818426**

(43) Veröffentlichungstag der Anmeldung:
**06.12.89 Patentblatt 89/49**

(45) Bekanntmachung des Hinweises auf die Patenterteilung:
**05.05.93 Patentblatt 93/18**

(84) Benannte Vertragsstaaten:
**AT BE CH DE ES FR GB IT LI NL SE**

(56) Entgegenhaltungen:
**DE-A- 3 514 364**
**US-A- 2 768 991**

(73) Patentinhaber: **BASF Aktiengesellschaft**
**Carl-Bosch-Strasse 38**
**W-6700 Ludwigshafen(DE)**

(72) Erfinder: **Seelmann-Eggebert, Hans-Peter, Dr.**
**Friedrichstrasse 8**
**W-6905 Schriesheim(DE)**
Erfinder: **Boeckh, Dieter, Dr.**
**Trifelsring 63**
**W-6703 Limburgerhof(DE)**
Erfinder: **Hartmann, Heinrich, Dr.**
**Weinheimerstrasse 46**
**W-6703 Limburgerhof(DE)**
Erfinder: **Trieselt, Wolfgang, Dr.**
**Alwin-Mittasch-Platz 1**
**W-6700 Ludwigshafen(DE)**
Erfinder: **Baur, Richard, Dr.**
**Nelkenstrasse 1**
**W-6704 Mutterstadt(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

In der nicht vorveröffenlichten DE-Patentanmeldung DE-OS 37 12 326 werden wasserlösliche Copolymerisate beschrieben, die einen K-Wert von 15 bis 120 (bestimmt am Natriumsalz nach H. Fikentscher in wäßriger Lösung bei 25°C, einem pH-Wert von 7 und einer Polymerkonzentration des Na-Salzes von 1 Gew.%) haben und

a) 99,5 bis 80 Mol% wenigstens einer monoethylenisch ungesättigten $C_3$- bis $C_6$-Monocarbonsäure und

b) 0,5 bis 20 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) und b) immer 100 beträgt. Das einpolymerisierte Comonomer (b) ist erhältlich durch Umsetzung von

b1) Maleinsäureanhydrid, Itaconsäureanhydrid, Citraconsäureanhydrid oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Polyaminen, Polyalkylenpolyaminen, Polyethyleniminen, Aminoalkoholen, Hydroxy-amino- oder -diaminocarbonsäuren, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Aus der nicht vorveröffentlichten DE-Patentanmeldung DE-OS 37 12 317 sind wasserlösliche Copolymerisate bekannt, die einen K-Wert von 8 bis 100 (bestimmt am Na-Salz nach H. Fikentscher in wäßriger Lösung bei 25°C, einem pH-Wert von 7 und einer Polymerkonzentration des Na-Salzes von 1 Gew.%) haben und

a) 99 bis 15 Mol% wenigstens einer monoethylenisch ungesättigten $C_3$- bis $C_6$-Monocarbonsäure,

b) 0,5 bis 84,5 Mol% wenigstens einer monoethylenisch ungesättigten $C_4$- bis $C_6$-Dicarbonsäure,

c) 0 bis 20 Mol% eines oder mehrerer Hydroxyalkylester mit 2 bis 6 C-Atomen in der Hydroxyalkylgruppe von monoethylenisch ungesättigten $C_3$- bis $C_6$-Carbonsäuren,

d) 0 bis 30 Mol% anderen, mit a), b) und c) copolymerisierbaren, wasserlöslichen, monoethylenisch ungesättigten Monomeren und

e) 0,5 bis 15 Mol% wenigstens eines mindestens zwei ethylenisch ungesättigte, nicht konjugierte Doppelbindungen aufweisenden Comonomers, das mindestens eine -CO-OX -Gruppe hat, in der X ein Wasserstoff-, ein Alkalimetall- oder Erdalkalimetalläquivalent oder eine Ammoniumgruppe bedeutet,

mit der Maßgabe einpolymerisiert enthalten, daß die Summe der Angaben in Mol% a) bis e) immer 100 beträgt.

Der vorliegenden Erfindung liegt die Aufgabe zugrunde, die Eigenschaften der aus den oben genannten Patentanmeldungen bekannten Polymerisate zu modifizieren.

Die Aufgabe wird erfindungsgemäß gelöst mit einem Verfahren zur Herstellung von wasserlöslichen Polymerisaten mit K-Werten von 5 bis 100 (bestimmt am Na-Salz der Polymerisate nach H. Fikentscher in wäßriger Lösung bei 25°C, einem pH-Wert von 7 und einer Polymerkonzentration des Na-Salzes von 1 Gew.%) durch Polymerisieren von Monomermischungen aus

(a) monoethylenisch ungesättigten $C_3$- bis $C_6$-Monocarbonsäuren und

(b) Monomeren, die mindestens zwei ethylenisch ungesättigte, über mindestens eine Ester- oder Amidfunktion verbundene Doppelbindungen aufweisen und die mindestens eine -CO-OX-Gruppe enthalten, in der X ein Wasserstoff-, ein Alkalimetall- oder ein Erdalkalimetalläquivalent oder eine Ammoniumgruppe bedeutet,

in wäßriger Lösung in Gegenwart von Polymerisationsinitiatoren bei Temperaturen bis zu 200°C, wenn man Monomermischungen, die mehr als 20 bis 100 Mol% (b) enthalten, in Gegenwart von bis zu 50 Gew.% Polymerisationsinitiatoren, bezogen auf die eingesetzten Monomeren, polymerisiert.

Eine weitere Modifizierung der Polymerisate wird dadurch erreicht, daß man die Polymerisation zusätzlich in Gegenwart von Monomeren aus den Gruppen

(c) 0 bis 79,9 Mol% monoethylenisch ungesättigte $C_4$- bis $C_6$-Dicarbonsäuren,

(d) 0 bis 20 Mol% Hydroxyalkylester mit 2 bis 6 C-Atomen in der Hydroxyalkylgruppe von monoethylenisch ungesättigten $C_3$- bis $C_6$-Carbonsäuren,

(e) 0 bis 30 Mol% anderen, mit den Monomeren der Gruppen (a) bis (d) copolymerisierbaren, wasserlöslichen, monoethylenisch ungesättigten Monomeren, und

(f) 0 bis 10 Mol% an Monomeren, die mindestens zwei ethylenisch ungesättigte nicht konjugierte Doppelbindungen aufweisen und von den Monomeren (b) verschieden sind,

durchführt, wobei die Summe der Angaben in Mol% für (a) bis (f) immer 100 beträgt und mindestens eine der Komponenten (c) bis (f) zu 0,1 Mol% in den Monomermischungen enthalten ist.

Als Komponente a) der wasserlöslichen Copolymerisate kommen monoethylenisch ungesättigte $C_3$- bis $C_6$-Monocarbonsäuren in Betracht. Geeignete Carbonsäuren dieser Art sind beispielsweise Acrylsäure, Methacrylsäure, Ethacrylsäure, Vinylessigsäure, Allylessigsäure und Crotonsäure. Vorzugsweise verwendet man als Monomer der Komponente a) Acrylsäure und/oder Methacrylsäure. Die Monomeren der Komponente a) sind zu 0 bis 79,9, vorzugsweise 10 bis 75 Mol% in der Monomermischung enthalten.

Wesentlicher Bestandteil der Polymerisate sind die Monomeren der Komponente b). Hierbei handelt es sich um Monomere, die mindestens zwei ethylenisch ungesättigte, über mindestens eine Ester- oder Amidfunktion verbundene, nicht konjugierte Doppelbindungen und mindestens eine -CO-OX-Gruppe und/oder deren Salz mit einer Alkalimetall-, Ammonium- oder Erdalkalimetallbase aufweisen. Diese Monomeren sind zu mehr als 20 bis 100, vorzugsweise 25 bis 90 Mol% in der Monomermischung enthalten, d.h. sie können auch zu Homopolymerisaten polymerisiert werden.

Die Monomeren b) sind erhältlich durch Umsetzung von

b1) Maleinsäureanhydrid, Itaconsäureanhydrid, Citraconsäureanhydrid oder deren Gemischen mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerinen eines Molekulargewichts bis 2.000, Diaminen, Polyalkylenpolyaminen, Polyethyleniminen, Aminoalkoholen, Hydroxi-amino- oder -diaminocarbonsäuren, wie insbesondere Lysin und Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen.

Mehrwertige, 2 bis 6 C-Atome aufweisende Alkohole sind beispielsweise Glykol, Glycerin, Pentaerythrit und Monosaccharide, wie Glucose, Mannose, Galactose, Uronsäuren wie Galacturonsäure und Zuckersäuren, wie Schleimsäure oder Galactonsäure.

Unter wasserlöslichen Polyalkylenglykolen sollen die Anlagerungsprodukte von Ethylenoxid, Propylenoxid, n-Butylenoxid und Isobutylenoxid oder deren Gemischen an mehrwertige, 2 bis 6 Kohlenstoffatome aufweisende Alkohole verstanden werden, z.B. die Anlagerungsprodukte von Ethylenoxid an Glykol, Anlagerungsprodukte von Ethylenoxid an Glycerin, Anlagerungsprodukte von Ethylenoxid an Pentaerythrit, Anlagerungsprodukte von Ethylenoxid an Monosaccharide, sowie die Anlagerungsprodukte von Mischungen der genannten Alkylenoxide an mehrwertige Alkohole. Bei diesen Anlagerungsprodukten kann es sich um Blockcopolymerisate von Ethylenoxid und Propylenoxid, von Ethylenoxid und Butylenoxiden oder von Ethylenoxid, Propylenoxid und Butylenoxiden handeln. Außer den Blockcopolymerisaten kommen solche Anlagerungsprodukte in Betracht, die die genannten Alkylenoxide in statistischer Verteilung einpolymerisiert enthalten.

Das Molekulargewicht der Polyalkylenglykole beträgt zweckmäßigerweise bis zu 5.000, vorzugsweise bis 2.000. Von den wasserlöslichen Polyalkylenglykolen verwendet man vorzugsweise Diethylenglykol, Triethylenglykol, Tetraethylenglykol und Polyethylenglykol eines Molekulargewichts von bis zu 1.500.

Als Komponente b2) kommen außerdem Polyglycerine eines Molekulargewichts bis 2.000 in Betracht. Vorzugsweise verwendet man von dieser Stoffklasse Diglycerin, Triglycerin und Tetraglycerin.

Geeignete Polyamine sind beispielsweise bevorzugt Diamine, wie Ethylendiamin, 1,3-Propylendiamin, 1,4-Butylendiamin, 1,6-Hexamethylendiamin und Melamin. Als Polyalkylenpolyamine kommen beispielsweise Diethylentriamin, Triethylentetramin, Pentaethylenhexamin, N-(3-Aminopropyl)-1,3-propandiamin und 3-(2-Aminoethyl)-aminopropylamin in Betracht. Besonders geeignete Polyethylenimine haben ein Molekulargewicht bis 5.000.

Als Komponente b2) kommen außerdem Aminoalkohole, wie Ethanolamin, 2-Aminopropanol-1, Neopentanolamin und 1-Methylamino-2-propanol in Betracht.

Als Komponente b2) eignen sich außerdem wasserlösliche Copolymerisate aus Ethylenoxid und Kohlendioxid, die durch Copolymerisieren von Ethylenoxid und Kohlendioxid erhältlich sind. Außerdem kommen Polyvinylalkohole eines Molekulargewichts bis 10.000, vorzugsweise Polyvinylalkohole mit einem Molekulargewicht bis zu 6.000 in Betracht. Die Polyvinylalkohole, die durch Hydrolyse aus Polyvinylacetat hergestellt werden, können ganz oder teilweise hydrolysiert sein. Weitere geeignete Verbindungen der

Komponente b2) sind Lysin, Serin, Allylalkohol, Allylamin und Hydroxyalkylester mit 2 bis 6 C-Atomen in der Hydroxyalkylgruppe von monoethylenisch ungesättigten $C_3$- bis $C_6$-Mono- und Dicarbonsäuren. Außerdem eignen sich Hydroxyalkylester von gesättigten $C_3$- bis $C_6$-Hydroxycarbonsäuren, wie Hydroxyessigsäureglykol(mono)ester, Milchsäureglycol(mono)ester, Hydroxypivalinsäureneopentylglycol-(mono)ester.

Vorzugsweise werden Monomere b) aus Maleinsäureanhydrid und Ethylenglykol, Polyethylenglykol eines Molekulargewichts bis 2.000, Glycerin, Diglycerin, Triglycerin, Tetraglycerin, sowie Polyglycerinen eines Molekulargewichts bis 2.000, Pentaerythrit, Monosacchariden, Neopentylglykol, $\alpha,\omega$-Diaminen mit 2 bis 6 C-Atomen, $\alpha,\omega$-Diolen mit 3 bis 6 C-Atomen und Hydroxypivalinsäureneopentylglykolester eingesetzt. Monomere b), die sich von Polyethylenglykol und $\alpha,\omega$-Diolen ableiten, können z.B. mit Hilfe folgender Formel dargestellt werden:

$$XOOC-CH=CH-CO-O-\left[CH_2-CH_2-O\right]_n-CO-CH=CH-COOX \qquad (I),$$

in der X = H, Alkalimetall oder eine Ammoniumgruppe und n = 1 bis 120, vorzugsweise bis 50 bedeutet.

Monomere b) die beispielsweise durch Umsetzung von Maleinsäureanhydrid mit $\alpha,\omega$-Diaminen entstehen, können z.B. mit Hilfe folgender Formel

$$XOOC-CH=CH-CO-NH-CH_2-(CH_2)_n-CH_2-NH-CO-CH=CH-COOX \qquad (II),$$

in der X = H, Alkalimetall oder eine Ammoniumgruppe und n = 0 bis 4 bedeutet, charakterisiert werden.

Als Monomer der Komponente c) werden ggf. monoethylenisch ungesättigte $C_4$-bis $C_6$-Dicarbonsäuren eingesetzt. Hierbei handelt es sich beispielsweise um Maleinsäure, Itaconsäure, Citraconsäure, Mesaconsäure, Fumarsäure und Methylenmalonsäure. Vorzugsweise kommen Maleinsäure oder Itaconsäure als Monomer c) zur Anwendung. Die Monomeren c) sind zu 0 bis 79,9 Mol% in der bei der Polymerisation eingesetzten Monomermischung enthalten. Falls Monomere der Gruppe (c) eingesetzt werden, sind davon vorzugsweise 1 bis 65 Mol% in der Monomermischung enthalten.

Die Copolymerisate können gegebenenfalls Hydroxyalkylester mit 2 bis 6 C-Atomen in der Hydroxyalkylgruppe von monoethylenisch ungesättigten $C_3$- bis $C_6$-Carbonsäuren als Komponente d) einpolymerisiert enthalten. Die Hydroxyalkylestergruppen dieser Gruppe von Monomeren leiten sich von mehrwertigen Alkoholen ab, z.B. Glykol, Glycerin, Propandiol-1,2, Propandiol-1,3, Butandiol-1,4, Butandiol-1,3, Butandiol-2,3, Gemische der Butandiole oder Propandiole, Hexandiol-1,6 und Neopentylglykol. Die mehrwertigen Alkohole werden mit monoethylenisch ungesättigten $C_3$- bis $C_6$-Carbonsäuren verestert. Hierbei handelt es sich um diejenigen Carbonsäuren, die oben unter a) und b) genannt sind. Als Komponente c) eignen sich somit beispielsweise Hydroxyethylacrylat, Hydroxyethylmethacrylat, Hydroxy-n-propylmethacrylat, Hydroxy-n-propylacrylat, Hydroxyisopropylacrylat, Hydroxyisopropylmethacrylat, Hydroxy-n-butylacrylat, Hydroxyisobutylacrylat, Hydroxy-n-butylmethacrylat, Hydroxyisobutylmethacrylat, Hydroxyethylmonomaleinat, Hydroxyethyldimaleinat, Hydroxypropylmonomaleinat, Hydroxypropyldimaleinat, Hydroxy-n-butylmonomaleinat, Hydroxy-n-butyldimaleinat und Hydroxyethylmonoitaconat. Von den Hydroxyalkylestern der monoethylenisch ungesättigten Dicarbonsäuren kommen sowohl die Mono- als auch die Diester der Dicarbonsäuren mit den oben genannten mehrwertigen Alkoholen in Betracht.

Vorzugsweise verwendet man als Komponente d) Hydroxyethylacrylat, Hydroxyethylmethacrylat, Butan-1,4-diolmonoacrylat und die technischen Gemische von Hydroxypropylacrylaten. Hierbei sind von besonderer technischer Bedeutung die Isomerengemische aus 2-Hydroxy-1-propylacrylat und 1-Hydroxy-2-propylacrylat. Diese Hydroxyalkylacrylate werden durch Umsetzung von Acrylsäure mit Propylenoxid hergestellt. Die Monomeren der Gruppe d) sind zu 0 bis 20 Mol% in der Monomermischung enthalten. Falls Monomere der Gruppe (d) eingesetzt werden, sind sie in Mengen von vorzugsweise 1 bis 15 Mol% in der Monomermischung enthalten.

Die Copolymerisate können gegebenenfalls als weitere Komponente Monomere der Gruppe (e) einpolymerisiert enthalten. Es handelt sich hierbei um andere, mit a), b), c) und d) copolymerisierbare, wasserlösliche monoethylenisch ungesättigte Monomere. Geeignete Monomere dieser Art sind beispielsweise Acrylamid, Methacrylamid, 2-Acrylamido-2-methylpropansulfonsäure, Vinylsulfonsäure, Allylsulfonsäure, Vinylphosphonsäure, Allylphosphonsäure, Acrylnitril, Methacrylnitril, Dimethylaminoethylacryat, Diethylaminoethylacrylat, Diethylaminoethylmethacrylat, N-Vinylpyrrolidon, N-Vinylformamid, N-Vinylimidazol, N-Vinylimidazolin, 1-Vinyl-2-methyl-2-imidazolin, Vinylacetat sowie Mischungen der genannten Monomeren. Diejenigen Monomeren dieser Gruppe, die Säuregruppen enthalten, können bei der Copolymerisation in Form der freien Säuregruppen oder auch in partiell oder vollständig mit Alkalimetallbasen oder Ammoniumbasen neutralisierter Form eingesetzt werden. Die basischen Acrylate, wie Diethylaminoethylacrylat, werden mit Säuren neutralisiert bzw. quaternisiert und dann der Copolymerisation unterworfen. Besonders bevorzugtes Monomer der Gruppe (e) ist Vinylacetat. Die Monomere der Gruppe (e) sind zu 0 bis 30 Mol% in der Monomermischung enthalten, die polymerisiert wird. Falls Monomere aus dieser Gruppe eingesetzt werden, beträgt die vorzugsweise angewendete Menge in der Monomermischung 1 bis 25 Mol%.

Als ggf. eingesetztes Comonomer f) werden mindestens zwei ethylenisch ungesättigte Doppelbindungen aufweisende Verbindungen eingesetzt, die nicht unter die Definition der Verbindungen der Gruppe b) fallen. Geeignete Comonomere f) sind beispielsweise N,N'-Methylen-bisacrylamid, Polyethylenglykoldiacrylate und Polyethylenglykoldimethylacrylate, die sich jeweils von Polyethylenglykolen eines Molekulargewichts von 106 bis 4000 ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bis dreifach mit Acrylsäure oder Methacrylsäure veresterte Anlagerungsprodukte von Ethylenoxid und/oder Propylenoxid an Trimethylolpropan, mindestens zweifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether, Trimethylolpropandiallylether, Butandioldivinylether, Pentaerythrittriallylether und/oder Divinylethylenharnstoff. Vorzugsweise setzt man als wasserlösliche Comonomere f) ein, z.B. N,N'-Methylen-bisacrylamid, Polyethylenglykoldiacrylate, Polyethylenglykoldimethacrylate, Pentaerythrittriallylether und/oder Divinylharnstoff.

Die Comonomeren der Gruppe f) sind in Mengen von 0 bis 10 Mol% in der Monomermischung anwesend. Falls Comonomere der Gruppe f) bei der Polymerisation eingesetzt werden, verwendet man davon vorzugsweise 0,1 bis 6 Mol%.

Die wasserlöslichen Polymerisate werden durch Polymerisieren der unter (a) bis (f) genannten Monomermischungen oder von Monomeren der Gruppen (a) und (b) in organisch/wäßrigem, vorzugsweise in rein wäßrigem Medium hergestellt. Die Polymerisation kann nach verschiedenen Verfahrensvarianten erfolgen, z.B. diskontinuierlich in Form wäßriger Monomerlösungen in einer Batch-Fahrweise. Außerdem ist es möglich, zunächst einen Teil der Monomeren und einen Teil des Initiators im Polymerisationsreaktor vorzulegen, unter Inertgasatmosphäre auf die Polymerisationstemperatur zu erwärmen und dann die übrigen Monomeren und den Initiator nach Fortschritt der Polymerisation dem Reaktor zuzugeben. Die Polymerisationstemperaturen liegen im Bereich von 20 bis 200 °C. Bei Temperaturen oberhalb von 100 °C arbeitet man in Druckapparaturen. Vorzugsweise beträgt die Polymerisationstemperatur 50 bis 150 °C.

In einer bevorzugten Ausführungsform des Herstellverfahrens wird zunächst das Monomer b) hergestellt, indem man

b1) Maleinsäureanhydrid, Itaconsäureanhydrid, Citraconsäureanhydrid oder deren Gemische in einem Reaktor vorlegt und darin mit

b2) mehrwertigen, 2 bis 6 C-Atome aufweisenden Alkoholen, wasserlöslichen oder wasserunlöslichen Polyalkylenglykolen eines Molekulargewichts bis etwa 400, wasserlöslichen Polyalkylenglykolen eines Molekulargewichts über etwa 400 bis 10.000, Polyglycerine eines Molekulargewichts bis 2.000, Diaminen, Polyalkylenpolyaminen, Polyethyleniminen, Aminoalkohole, Lysin, Serin, wasserlöslichen Copolymerisaten aus Ethylenoxid und Kohlendioxid, Polyvinylalkohol eines Molekulargewichts bis 10.000, Allylalkohol, Allylamin, Hydroxyalkylester mit 2 bis 6 C-Atomen in der Hydroxyalkylgruppe von monoethylenisch ungesättigten $C_3$- bis $C_6$-Carbonsäuren oder von gesättigten $C_3$- bis $C_6$-Hydroxycarbonsäuren oder deren Mischungen

bei Temperaturen von 50 bis 200 °C umsetzt. Diese Umsetzung wird vorzugsweise in Abwesenheit von Wasser vorgenommen, geringe Mengen an Wasser stören dabei jedoch dann nicht, wenn die Komponente b1) in entsprechendem Überschuß eingesetzt wird. Anstelle von den unter b1) genannten Verbindungen kann man jedoch auch die sich davon ableitenden Mono- oder Diester mit $C_1$- bis $C_4$-Alkoholen einsetzen. In diesen Fällen wird eine Umesterung bzw. Amidierung durchgeführt und vorzugsweise der dabei entstehende $C_1$- bis $C_4$-Alkohol aus dem Reaktionsgemisch abdestilliert. Bei Einsatz von Aminogruppen enthaltenden Verbindungen, die unter b2) genannt sind, entstehen bei der Umsetzung mit den Mono- oder Diestern der Säureanhydride gemäß b1) die entsprechenden Amide. Falls bei der Herstellung der Comonomeren b) Ester der Komponente b1) eingesetzt werden, so sind dies vorzugsweise Maleinsäuredimethylester, Maleinsäuremonomethylester, Itaconsäuredimethylester, Maleinsäuremonoisopropylester und Maleinsäurediisopropylester. Gegebenenfalls können übliche Veresterungskatalysatoren mitverwendet

werden.

Pro Mol der Verbindungen b2) setzt man mindestens 0,5 Mol einer Verbindung der Komponente b1) ein. Die Temperatur bei der Umsetzung beträgt vorzugsweise 50 bis 150 ° C. Die Reaktion wird soweit geführt, daß praktisch ein quantitativer Umsatz der Komponente b2) gegeben ist. Die üblicherweise in einem Überschuß verwendete Komponente b1) kann nach Beendigung der Monomerherstellung im Reaktionsgemisch verbleiben. Das Comonomer kann in diesem Fall in einer monoethylenisch ungesättigten $C_3$- bis $C_6$-Monocarbonsäure gemäß a) gelöst werden und dann zusammen mit dem nicht umgesetzten Teil der Komponente b1) und den übrigen Monomeren der Copolymerisation unterworfen werden. Da die Copolymerisation in wäßrigem Medium erfolgt, wird das überschüssige, im Comonomer noch enthaltene Dicarbonsäureanhydrid gemäß b1) zu der entsprechenden Dicarbonsäure hydrolysiert. Diese Dicarbonsäure ist dann als das Comonomer c) aufzufassen.

Das zunächst hergestellte Comonomer b), das noch überschüssiges Dicarbonsäureanhydrid enthält, kann jedoch auch im Reaktionsgemisch, in dem es hergestellt wurde, verbleiben und darin zunächst durch Zugabe von Wasser bzw. verdünnter wäßriger Natronlauge gelöst werden. Hierbei wird das noch vorhandene Dicarbonsäureanhydrid hydrolysiert. Diese Monomermischung wird anschließend durch Zugabe der übrigen Monomeren copolymerisiert. Die Copolymerisation der Monomeren a) bis f) wird bei einem pH-Wert der wäßrigen Lösung von 2 bis 9, vorzugsweise von 3 bis 7 durchgeführt. Die Monomeren a), b) und c), die jeweils Carbonsäuregruppen enthalten, können in Form der freien Carbonsäuren oder in neutralisierter, vorzugsweise in partiell neutralisierter Form copolymerisiert werden, wobei der Neutralisationsgrad 0 bis 100, vorzugsweise 40 bis 90 Mol% beträgt. Die Neutralisation erfolgt vorzugsweise mit Alkalimetall- oder Ammoniumbasen. Hierunter sind beispielsweise Natronlauge, Kalilauge, Soda, Pottasche oder Ammoniumbasen wie Ammoniak, $C_1$- bis $C_{18}$-Alkylamine, Dialkylamine, wie Dimethylamin, Di-n-butylamin, Dihexylamin, tertiäre Amine wie Trimethylamin, Triethylamin, Tributylamin, Triethanolamin sowie quaternisierte Stickstoffbasen, z.B. Tetramethylammoniumhydroxid, Trimethyllaurylammoniumhydroxid und Trimethylbenzylammoniumhydroxid zu verstehen. Vorzugsweise verwendet man zum Neutralisieren Natronlauge, Kalilauge oder Ammoniak. Die Neutralisation kann jedoch auch mit Erdalkalimetallbasen, z.B. Ca-Hydroxid oder $MgCO_3$, vorgenommen werden.

Als Polymerisationsinitiatoren werden vorzugsweise wasserlösliche Radikal-bildende Verbindungen eingesetzt, z.B. Wasserstoffperoxid, Peroxidisulfate und Mischungen aus Wasserstoffperoxid und Peroxidisulfaten. Geeignete Peroxidisulfate sind beispielsweise Lithium-, Natrium-, Kalium- und Ammoniumperoxidisulfat. Bei Mischungen aus Wasserstoffperoxid und Peroxidisulfat kann jedes beliebige Verhältnis eingestellt werden, vorzugsweise verwendet man Wasserstoffperoxid und Peroxidisulfat im Gewichtsverhältnis 3:1 bis 1:3. Mischungen aus Wasserstoffperoxid und Natriumperoxidisulfat werden vorzugsweise im Gewichtsverhältnis von 1:1 angewendet. Die oben genannten wasserlöslichen Polymerisationsinitiatoren können gegebenenfalls auch in Kombination mit Reduktionsmitteln, z.B. Eisen-II-sulfat, Natriumsulfit, Natriumhydrogensulfit, Natriumdithionit, Triethanolamin und Ascorbinsäure in Form der sogenannten Redox-Initiatoren verwendet werden. Geeignete wasserlösliche organische Peroxide sind beispielsweise Acetylacetonperoxid, Methylethylketonperoxid, tert.-Butylhydroperoxid und Cumolhydroperoxid. Auch die wasserlöslichen organischen Peroxide können mit den oben genannten Reduktionsmitteln eingesetzt werden. Weitere wasserlösliche Polymerisationsinitiatoren sind Azostarter, z.B. 2,2'-Azobis(2-amidinopropan)dihydrochlorid, 2,2'-Azobis(N,N'-dimethylen)isobutyramidin-dihydrochlorid, 2-(Carbamoylazo)-isobutyronitril und 4,4'-Azobis-(4-cyanovaleriansäure). Man kann die Polymerisation auch mit wasserunlöslichen Initiatoren, wie Dibenzoylperoxid, Dicyclohexylperoxidicarbonat, Dilaurylperoxid oder Azodiisobutyronitril, starten.

Die Initiatoren werden in Mengen von 0,5 bis 50, vorzugsweise 0,5 bis 30 Gew.%, bezogen auf die Summe der bei der Polymerisation eingesetzten Monomeren, angewendet. Die Polymerisationsinitiatoren können entweder zusammen mit dem Monomeren oder getrennt davon kontinuierlich oder absatzweise der zu polymerisierenden Mischung zugegeben werden.

Die Polymerisation kann gegebenenfalls auch in Gegenwart von Reglern durchgeführt werden. Hierfür verwendet man vorzugsweise wasserlösliche Verbindungen, die entweder in jedem Verhältnis mit Wasser mischbar sind oder sich zu mehr als 5 Gew.% darin bei einer Temperatur von 20 ° C lösen. Verbindungen dieser Art sind beispielsweise Aldehyde mit 1 bis 4 Kohlenstoffatomen, wie Formaldehyd, Acetaldehyd, Propionaldehyd, n-Butyraldehyd und Isobutyraldehyd, Ameisensäure, Ammoniumformiat, Hydroxylammoniumsalze, insbesondere Hydroxylammoniumsulfat, SH-Gruppen enthaltende Verbindungen mit bis zu 6 Kohlenstoffatomen, wie Thioglykolsäure, Mercaptoalkohole, wie Mercaptoethanol, Mercaptopropanol, Mercaptobutanole und Mercaptohexanol, ein- und mehrwertige Alkohole mit bis zu 6 C-Atomen, wie Isopropanol, Glykol, Glycerin und Isobutanol. Vorzugsweise in Betracht kommende Regler sind wasserlösliche Mercaptane, Ammoniumformiat und Hydroxylammoniumsulfat. Die Regler werden in Mengen von 0 bis

25 Gew.%, bezogen auf die Summe der bei der Polymerisation eingesetzten Monomeren, verwendet. Die besonders wirksamen Regler, die vorzugsweise in Betracht kommen, werden in Mengen bis höchstens 15 Gew.% eingesetzt. Sofern in Gegenwart von Reglern gearbeitet wird, beträgt die minimale Einsatzmenge 0,2 Gew.%, bezogen auf die zu polymerisierenden Monomeren.

Nach dem erfindungsgemäßen Verfahren polymerisiert man vorzugsweise Monomermischungen aus

a) 79,9 bis 10 Mol% Acrylsäure und/oder Methacrylsäure,

b) 20,1 bis 90 Mol% einer Verbindung der Formel

$$XOOC-CH=CH-CO-O-(CH_2-CH_2-O)_n-CO-CH=CH-COOX \quad (I),$$

in der X = H, Alkalimetall oder Ammoniumgruppe und n = 1 bis 120 bedeutet, und

c) 0 bis 69,9 Mol% Maleinsäure

in Gegenwart von bis zu 30 Gew.% Polymerisationsinitiatoren, bezogen auf die eingesetzten Monomeren, polymerisiert. Bevorzugt ist außerdem die Polymerisation von Monomermischungen aus

a) 79,9 bis 10 Mol% Acrylsäure und/oder Methacrylsäure,

b) 20,1 bis 90 Mol% einer Verbindung der Formel

$$XOOC-CH=CH-CO-NH-CH_2-(CH_2)_n-CH_2-NH-CO-CH=CH-COOX \quad (II),$$

in der X = H, Alkalimetall oder eine Ammoniumgruppe und n = 0 bis 4 bedeutet, und

c) 0 bis 69,9 Mol% Maleinsäure.

in Gegenwart von bis zu 30 Gew. % Polymersationsinitiatoren, bezogen auf die eingesetzten Monomeren, polymerisiert.

Die Summe der Angaben in Mol% a) bis c) beträgt dabei jeweils 100.

Überraschenderweise erhält man auch dann wasserlösliche Copolymerisate, wenn man Monomergemische aus

a) 79,9 bis 10 Mol% Acrylsäure und/oder Methacrylsäure,

b) 20,1 bis 90 Mol% einer Verbindung der Formel

$$XOOC-CH=CH-CO-O{+}CH_2-CH_2-O{+}_nCO-CH=CH-COOX \quad (I),$$

in der X = H, Alkalimetall oder eine Ammoniumgruppe und n = 0 bis 4 bedeutet,

c) 0 bis 69,9 Mol% Maleinsäure und

f) 0 bis 5 Mol% Comonomeren, die erhältlich sind durch Veresterung von

$f_1$) Acrylsäure und/oder Methacrylsäure mit

$f_2$) mehrwertigen 2 bis 6 C-Atome aufweisenden Alkoholen, Polyalkylenglykolen bis zu einem Molekulargewicht von 4.000, Polyglycerinen eines Molekulargewichts bis 2.000, Aminoalkoholen, Hydroxyamino- oder -diaminocarbonsäuren, wasserlöslichen Copolymerisaten von Ethylenoxid und Kohlendioxid, Allylalkohol, Hydroxyalkylestern mit 2 bis 6 C-Atomen in der Hydroxyalkylgruppe von monoethylenisch ungesättigten $C_3-C_6$-Carbonsäuren oder von gesättigten $C_3-C_6$-Hydroxycarbonsäuren oder deren Mischungen

in Gegenwart von 0,2 bis 25 Gew.%, bezogen auf die Monomeren, an Reglern polymerisiert. Die Summe der Angaben in Mol% a), b), c) und f) beträgt immer 100, mindestens eine der Komponenten c) oder f) ist zu 0,1 Mol% in den Monomergemischen enthalten.

Bei der Copolymerisation der Monomeren a) bis f) bzw. der Homopolymerisation der Monomeren der Gruppe b) werden wäßrige Polymerisatlösungen erhalten, die einen Polymerisatgehalt bis zu 70 Gew.% aufweisen. Es ist selbstverständlich auch möglich, stark verdünnte, z.B. 1 %ige wäßrige Lösungen herzustellen, jedoch wird die Copolymerisation aus wirtschaftlichen Erwägungen so geführt, daß man mindestens 10 gew.%ige wäßrige Copolymerisatlösungen herstellt. Die Lösungen können nach der Copolymerisation auf einen pH-Wert im Bereich von 6,5 bis 7 eingestellt werden, sofern nicht die Polymerisation ohnehin in diesem Bereich durchgeführt wurde. Die Copolymerisate können durch Eindampfen der wäßrigen Lösungen gewonnen werden. Sie haben einen niedrigen Restmonomerengehalt und sind biologisch abbaubar. Die biologische Abbaubarkeit der erfindungsgemäßen Copolymerisate beträgt nach DIN 38 412, Teil 24, Statischer Test (L25) bis zu 100 %, und liegt in der Regel zwischen 20 und 95 %.

Die Copolymerisate sind wasserlöslich. Falls sie sich in der freien Säureform nicht in Wasser lösen, so gelingt es, sie durch partielle oder vollständige Neutralisation mit NaOH, KOH, Ammoniak oder Aminen in eine wasserlösliche Form zu überführen. Copolymerisate, deren Alkali- oder Ammoniumsalze, von denen sich mindestens 20 g pro Liter Wasser bei einer Temperatur von 20°C lösen, werden im vorliegenden

Zusammenhang als wasserlöslich bezeichnet.

Die oben beschriebenen Polymerisate werden als Zusatz zu Wasch- und Reinigungsmitteln verwendet. Sie können dabei pulverförmigen oder auch flüssigen Formulierungen zugesetzt werden. Die Wasch- und Reinigungsmittelformulierungen basieren üblicherweise auf Tensiden und gegebenenfalls Buildern. Bei reinen Flüssigwaschmitteln wird meist auf den Einsatz von Buildern verzichtet. Als Tenside eignen sich beispielsweise anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole, ferner nichtionische Tenside, wie $C_8$- bis $C_{12}$-Alkylphenolethoxylate, $C_{12}$-$C_{20}$-Alkanolalkoxylate, sowie Blockcopolymerisate des Ethylenoxids und Propylenoxids. Die Endgruppen der Polyalkylenoxide können gegebenenfalls verschlossen sein. Hierunter soll verstanden werden, daß die freien OH-Gruppen der Polyalkylenoxide verethert, verestert, acetalisiert und/oder aminiert sein können. Eine weitere Modifizierungsmöglichkeit besteht darin, daß man die freien OH-Gruppen der Polyalkylenoxide mit Isocyanaten umsetzt.

Zu den nichtionischen Tensiden zählen auch $C_4$- bis $C_{18}$-Alkylglucoside sowie die daraus durch Alkoxylierung erhältlichen alkoxilierten Produkte, insbesondere diejenigen, die durch Umsetzung von Alkylglucosiden mit Ethylenoxid herstellbar sind. Die in Waschmitteln einsetzbaren Tenside können auch zwitterionischen Charakter haben sowie Seifen darstellen. Die Tenside sind im allgemeinen in einer Menge von 2 bis 50, vorzugsweise 5 bis 45 Gew.% am Aufbau der Wasch- und Reinigungsmittel beteiligt.

In den Wasch- und Reinigungsmitteln enthaltene Builder sind beispielsweise Phosphate, z.B. ortho-Phosphat, Pyrophosphat und vor allem Pentanatriumtriphosphat, Zeolithe, Soda, Polycarbonsäuren, Nitrilotriessigsäure, Zitronensäure, Weinsäure, die Salze der genannten Säuren sowie monomere, oligomere oder polymere Phosphonate. Die einzelnen Stoffe werden in unterschiedlichen Mengen zur Herstellung der Waschmittelformulierungen eingesetzt, z.B. Soda in Mengen bis zu 80 %, Phosphate in Mengen bis zu 45 %, Zeolithe in Mengen bis zu 40 %, Nitrilotriessigsäure und Phosphonate in Mengen bis zu 10 % und Polycarbonsäuren in Mengen bis zu 20 %, jeweils bezogen auf das Gewicht der Stoffe sowie auf die gesamte Waschmittelformulierung. Wegen der starken Umweltbelastungen, die der Einsatz von Phosphaten mit sich bringt, wird der Gehalt an Phosphaten in Wasch- und Reinigungsmitteln in zunehmendem Maße erniedrigt, so daß Waschmittel heute bis höchstens 25 % Phosphat enthalten oder sogar vorzugsweise phosphatfrei sind.

Die Polymerisate können auch als Zusatz zu Flüssigwaschmitteln verwendet werden. Flüssigwaschmittel enthalten üblicherweise als Abmischkomponente flüssige oder auch feste Tenside, die in der Waschmittelformulierung löslich oder zumindest dispergierbar sind. Als Tenside kommen hierfür die Produkte in Betracht, die auch in pulverförmigen Waschmitteln eingesetzt werden sowie flüssige Polyalkylenoxide bzw. polyalkoxylierte Verbindungen.

Waschmittelformulierungen können außerdem als weitere Zusätze Korrosionsinhibitoren, wie Silikate, enthalten. Geeignete Silikate sind beispielsweise Natriumsilikat, Natriumdisilikat und Natriummetasilikat. Die Korrosionsinhibitoren können in Mengen bis zu 25 Gew.% in der Wasch- und Reinigungsmittelformulierung enthalten sein. Weitere übliche Zusätze zu Wasch- und Reinigungsmitteln sind Bleichmittel, die in einer Menge bis zu 30 Gew.% darin enthalten sein können. Geeignete Bleichmittel sind beispielsweise Perborate oder chlorabgebende Verbindungen, wie Chlorisocyanurate. Eine andere Gruppe von Additiven, die gegebenenfalls in Waschmitteln enthalten sein kann, sind Vergrauungsinhibitoren. Bekannte Stoffe dieser Art sind Carboxymethylcellulose, Methylcellulose, Hydroxypropylmethylcellulose und Pfropfpolymerisate von Vinylacetat auf Polyalkylenoxide eines Molekulargewichts von 1 000 bis 15 000. Vergrauungsinhibitoren können in Mengen bis zu 5 % in der Waschmittelformulierung enthalten sein. Weitere übliche Zusatzstoffe zu Waschmitteln, die gegebenenfalls darin enthalten sein können, sind optische Aufheller, Enzyme und Parfüm. Die pulverförmigen Waschmittel können außerdem noch bis zu 50 Gew.% eines Stellmittels, wie Natriumsulfat, enthalten. Die Waschmittelformulierungen können wasserfrei sein bzw. geringe Mengen, z.B. bis zu 10 Gew.% Wasser enthalten. Flüssigwaschmittel enthalten üblicherweise bis zu 80 Gew.% Wasser. Übliche Waschmittelformulierungen sind beispielsweise detailliert in der DE-OS 35 14 364 beschrieben, auf die ausdrücklich hingewiesen wird.

Die oben beschriebenen Homo- und Copolymerisate können sämtlichen Wasch- und Reinigungsmittelformulierungen zugesetzt werden. Die dafür angewendeten Mengen liegen zwischen 0,5 und 25, vorzugsweise zwischen 1 bis 15 Gew.%, bezogen auf die gesamte Formulierung. Die zur Anwendung gelangenden Mengen an Polymerisaten betragen in den allermeisten Fällen vorzugsweise 2 bis 10 Gew.%, bezogen auf die Wasch- und Reinigungsmittelmischung. Von besonderer Bedeutung ist der Einsatz der erfindungsgemäß zu verwendenden Additive in phosphatfreien und phosphatarmen Wasch- und Reinigungsmitteln. Die phosphatarmen Formulierungen enthalten bis höchstens 25 Gew.% Pentanatriumtriphosphat oder Pyrophosphat. Die Copolymerisate werden vorzugsweise in phosphatfreien Formulierungen

eingesetzt.

Falls gewünscht, können die erfindungsgemäß zu verwendenden Polymerisate zusammen mit bekannten Copolymerisaten aus Acrylsäure und Maleinsäure bzw. Homopolymerisaten aus Acrylsäure in Waschmittelformulierungen eingesetzt werden. Die zuletzt genannten Polymerisate sind bisher als Inkrustierungsinhibitoren in Waschmittelformulierungen verwendet worden. Außer den bereits genannten Polymerisaten kommen auch Copolymerisate aus $C_3$- bis $C_6$-Mono- und Dicarbonsäuren oder Maleinsäureanhydrid und $C_1$- bis $C_4$-Alkylvinylethern in Betracht. Das Molekulargewicht der Homo- und Copolymerisate beträgt 1000 bis 100 000. Falls gewünscht, können diese Inkrustierungsinhibitoren in einer Menge bis zu 10 Gew.%, bezogen auf die gesamte Formulierung, neben den erfindungsgemäß zu verwendenden Copolymerisaten in Waschmitteln eingesetzt werden.

Die Copolymerisate können sowohl in Form der freien Säuren, in vollständig neutralisierter Form oder in partiell neutralisierter Form Waschmittelformulierungen zugesetzt werden.

Die in den Beispielen angegebenen K-Werte wurden nach H. Fikentscher, Cellulosechemie, Band 13, 58-64 und 71-74 (1932) bestimmt. Dabei bedeutet $K = k \cdot 10^3$. Die Messungen wurden in allen Fällen am Natriumsalz in wäßriger Lösung bei 25 °C, einem pH-Wert von 7 und einer Polymerkonzentration des Natriumsalzes von 1 Gew.% vorgenommen.

Beispiel 1

Die Polymerisationsapparatur besteht aus einem 2 l fassenden Glasreaktor, der mit Rührer, Thermometer, Stickstoffeinleitung und vier Zulaufgefäßen ausgestattet ist, von denen eines heiz- und rührbar ist.

Vor Beginn der Polymerisation werden im heizbaren Zulaufgefäß 2 Mol (196 g) MSA (Maleinsäureanhydrid) mit 1,05 Mol des in Tabelle 1 angegebenen 2-wertigen Alkohols und 0,2 g p-Toluolsulfonsäure versetzt. Unter Rühren wird bis zur vollständigen Veresterung (1 bis 3 Stunden) auf 80 °C erhitzt.

Zur Polymerisation werden im Reaktionsgefäß 100 ml Wasser vorgelegt und unter Stickstoffspülung auf 90 °C erwärmt. Dann werden die in Tabelle 1 angegebenen Mengen Acrylsäure und 25 %ige Natronlauge, sowie die Schmelze aus dem heizbaren Zulaufgefäß über einen Zeitraum von vier Stunden zugegeben. Beginnend mit dem Monomerenzulauf werden die in Tabelle 1 angegebenen Mengen $H_2O_2$ und Natriumpersulfat gelöst in 200 ml Wasser über einen Zeitraum von 5 1/4 Stunden zugetropft. Man erhält eine viskose wäßrige Lösung, die noch eine Stunde nach Beendigung der Initiatorzugabe bei einer Temperatur von 90 °C nachpolymerisiert wird. Die wäßrige Lösung wird nach dem Abkühlen mit 50 %iger wäßriger Natronlauge auf einen pH-Wert von 6,5 eingestellt. Die Einsatzstoffe, die K-Werte und die Daten zur biologischen Abbaubarkeit der Copolymerisate sind in Tabelle 1 angegeben.

Tabelle 1

| Beispiel Nr. | Herstellung des Comonomeren b) b1 (Mol) | b2 (Mol) | Comonomer b) (Mol%) | Comonomer a) Acrylsäure (Mol) | Acrylsäure (Mol%) | 25 %ige wäßrige NaOH (g) | Starter gelöst in 200 ml $H_2O$: $H_2O_2$ 100 %ig (g) | Na-Persulfat (g) | K-Wert | Biologische Abbaubarkeit (%) |
|---|---|---|---|---|---|---|---|---|---|---|
| 1 | 2 MSA | 1,05 Ethylenglykol | 28,6 | 2,5 | 71,4 | 640 | 49,9 | 18,5 | 17,7 | 78 |
| 2 | 2 MSA | 1,05 Ethylenglykol | 33,3 | 2,0 | 66,7 | 560 | 45,7 | 16,9 | 16,8 | 77 |
| 3 | 2 MSA | 1,05 Ethylenglykol | 40,0 | 1,5 | 60,0 | 480 | 41,4 | 15,3 | 15,9 | 80 |
| 4 | 2 MSA | 1,05 Ethylenglykol | 50,0 | 1 | 50,0 | 400 | 37,2 | 13,8 | 12,9 | 82 |
| 5 | 2 MSA | 1,05 Butandiol | 22,4 | 2,75 | 78,6 | 680 | 51,9 | 19,2 | 19,4 | 73 |
| 6 | 2 MSA | 1,05 Triethylenglykol | 30,8 | 2,25 | 69,2 | 600 | 47,8 | 17,7 | 17,5 | 74 |
| 7 | 2 MSA | 1,05 Diethylenglykol | 36,4 | 1,75 | 63,6 | 520 | 43,5 | 16,2 | 15,4 | 76 |
| 8 | 2 MSA | 1,05 $PEG_{300}$ | 44,4 | 1,25 | 55,5 | 440 | 39,3 | 14,6 | 14,7 | 80 |

$PEG_{300}$ = Polyethylenglykol eines mittleren Molekulargewichts von 300

Beispiele 9 bis 13

In einem 1 l-fassenden Glasreaktor, der mit Rührer, Thermometer, Stickstoffeinleitung, Kühler und zwei Zulaufgefäßen ausgestattet ist, werden 2,2 Mol (215,6 g) MSA, 0,2 g p-Toluolsulfonsäure und 100 ml

Tetrahydrofuran vorgelegt. Unter Erwärmen versetzt man mit der in Tabelle 2 angegebenen Menge mehrwertigen Alkohols und spült sorgfältig mit Stickstoff. Anschließend wird bis zur vollständigen Veresterung des mehrwertigen Alkohols (1 bis 5 Stunden) am Rückfluß gekocht. Nach dem Abkühlen auf 30 °C wird mit 300 g 25 %iger wäßriger Natronlauge (Zulauf I) neutralisiert, unter Erwärmen und Stickstoffspülung das Tetrahydrofuran abdestilliert und auf 90 °C erwärmt. Bei dieser Temperatur wird nun über einen Zeitraum von 4 Stunden eine Lösung von 25 g Natriumpersulfat in 220 ml 30 %iger $H_2O_2$ zugetropft (Zulauf II).

Man läßt 2 Stunden nachpolymerisieren und stellt den Polymerisationsansatz nach dem Abkühlen mit 25 %iger Natronlauge auf pH 7.

Die Mengen der eingesetzten Monomeren in Mol%, die K-Werte der Polymerisate und der Restmaleinsäuregehalt, sowie die Daten zur biologischen Abbaubarkeit sind in Tabelle 2 zusammengefaßt.

Tabelle 2

| Beispiel Nr. | mehrwertiger Alkohol (Mol); (g) | Comonomer b) (Mol%) | Comonomer c) MSA (Mol%) | K-Wert | Rest-MS[1] (%) | Biologischer Abbau (%) |
|---|---|---|---|---|---|---|
| 9 | Ethylenglykol 1 : 62 | 83,3 | 16,7 | 12,1 | 0,9 | 68 |
| 10 | Glycerin 0,5 : 46 | 29,4 | 70,6 | 8,3 | 2,3 | 71 |
| 11 | Diethylenglykol 1 : 106 | 83,3 | 16,7 | 11,3 | 0,8 | 66 |
| 12 | $PEG_{300}$[2] 0,5 : 150 | 22,7 | 77,3 | 8,4 | 2,6 | 77 |
| 13 | Triethylenglykol 0,75 : 78 | 51,7 | 48,3 | 10,8 | 1,2 | 63 |

1) MS = Maleinsäure
2) $PEG_{300}$ = Polyethylenglykol eines Molekulargewichts von 300
3) MSA = Maleinsäureanhydrid

Beispiele 14 bis 20

In einem 2 l-fassenden Glasreaktor, der mit Rührer, Thermometer, Stickstoffeinleitung, Kühler und vier Zulaufgefäßen ausgestattet ist, werden die in Tabelle 3 angegebenen Mengen (Mol) Monomer c) in 100 ml

Wasser vorgelegt und unter Rühren und Stickstoffbegasung erwärmt. Gleichzeitig wird die ebenfalls in Tabelle 3 angegebene Menge an Monomer b) in das heizbare Zulaufgefäß gefüllt und auf 60 ° C erwärmt. Die restlichen drei Zulaufgefäße werden nun je mit der in Tabelle 3 angegebenen Menge Monomer a), 25 %iger Natronlauge und $H_2O_2$ (in Form einer 30 %igen wäßrigen Lösung) beschickt und ebenfalls mit Stickstoff begast.

Zur Polymerisation werden nun über einen Zeitraum von 4 Stunden Monomer a), die Natronlauge und Monomer b), sowie gleichbeginnend über einen Zeitraum von 5 Stunden das $H_2O_2$ zugetropft. Man läßt 1 Stunde bei 95 ° C nachpolymerisieren und stellt nach dem Abkühlen mit 50 %iger Natronlauge auf pH 7.

In Tabelle 3 sind die jeweils eingesetzten Mengen an Monomeren, sowie die K-Werte der wasserlöslichen Copolymerisate und der Restmonomergehalt angegeben.

Tabelle 3

| Beispiel Nr. | Monomer a) (Mol); (Mol%) | Monomer c) (Mol); (Mol%) | Monomer b) (Mol); (Mol%) | 25 %ige NaOH (g) | STARTER $H_2O_2$ (Gew.%) | Restgehalt an MS (Gew.%) | K-Wert |
|---|---|---|---|---|---|---|---|
| 14 | Acrylsäure<br>2 : 62,5 | Maleinsäure<br>0,2 : 6,25 | Ethylenglykol-dimaleinat<br>1 : 31,25 | 560 | 15 | 1,28 | 17,6 |
| 15 | Acrylsäure<br>1,25 : 49 | Maleinsäure<br>0,3 : 11,75 | Ethylenglykol-dimaleinat<br>1 : 39,25 | 440 | 22,5 | 0,08 | 14,7 |
| 16 | Methacrylsäure<br>2 : 58,8 | Maleinsäure<br>0,4 : 11,75 | Triethylenglykol-dimaleinat<br>1 : 29,45 | 240 | 16 | 0,30 | 15.8 |
| 17 | Acrylsäure<br>2 : 60,6 | Citraconsäure<br>0,3 : 9,1 | $PEG_{400}$-Dimaleinat<br>1 : 30,3 | 240 | 10 | 0,01 | 18,9 |
| 18 | Acrylsäure<br>1,5 : 71,4 | Maleinsäure<br>0,1 : 4,8 | Diethylenglykol-dimaleinat<br>0,5 : 32,8 | 320 | 12 | 0,60 | 20,1 |
| 19 | Acrylsäure<br>2 : 71,5 | Maleinsäure<br>0,2 : 7,1 | Glycerin-trimaleinat<br>0,6 : 21,4 | 560 | 15 | 1,28 | 17,6 |
| 20 | Acrylsäure<br>1 : 38,5 | Maleinsäure<br>1 : 38,5 | Diethylenglykol-dimaleinat<br>0,6 : 23,0 | 230 | 12 | 0,15 | 12,9 |

$PEG_{400}$ = Polyethylenglykol eines mittleren Molekulargewichts von 400

Beispiele 21 bis 24

In einem 4 l – fassenden Glasreaktor, der ausgestattet ist mit Rührer, Thermometer, Stickstoffeinleitung und 6 Zulaufgefäßen, von denen eines heizbar ist, werden 200 ml Wasser vorgelegt und unter Stickstoff –

spülung auf 90 °C erwärmt. Während dieser Zeit werden die Zulaufgefäße, wie im folgenden angegeben, gefüllt:

| | |
|---|---|
| Zulauf I: | Lösung von mMol des in Tabelle 4 angegebenen Comonomeren f) in 2 Mol Acrylsäure |
| Zulauf II: | pMol Acrylsäure |
| Zulauf III: | Lösung von qGew.% Regler in 100 ml Wasser |
| Zulauf IV: | Schmelze von rMol des in der Tabelle aufgeführten Dimaleinats |
| (heizbar) | (Comonomer b) bei 60 bis 80 °C |
| Zulauf V: | S g 25 %ige wäßrige Natronlauge |
| Zulauf VI: | 25 g Natriumpersulfat gelöst in 500 ml 30 %igem $H_2O_2$ |

Bei 90 °C werden nun gleichbeginnend die Zuläufe I und III über einen Zeitraum von 2 h, Zulauf IV innerhalb von 4 h und Zulauf VI über einen Zeitraum von 5 1/2 h zudosiert. Zwei Stunden nach Beginn der Monomerzugabe wird Zulauf II über einen Zeitraum von 2 h und Zulauf V über einen Zeitraum von 3 h zugetropft.

Anschließend läßt man 1 h nachpolymerisieren und stellt den Ansatz nach dem Abkühlen mit 25 %iger wäßriger Natronlauge auf pH 7. Man erhält wäßrige Lösungen des Natriumsalzes der Copolymerisate.

Tabelle 4

| Beispiel Nr. | Comonomer a) 2+p(Mol):(Mol%) | r(Mol):(Mol%) | m(Mol):(Mol%) | q (Gew.%) | 25 %ige NaOH S (g) | K-Wert |
|---|---|---|---|---|---|---|
| 21 | Acrylsäure 3,8 ; 78,35 | Ethylenglykol-dimaleinat 1 ; 20,6 | $PEG_{400}$-Diacrylat 0,05 ; 1,05 | Mercapto-ethanol 5 | 600 | 37,5 |
| 22 | Acrylsäure 3,8 ; 62,7 | Diethylenglykol-dimaleinat 2 ; 33,9 | Glycerin-diacrylat 0,2 ; 3,4 | Thioglykol-säure 4 | 720 | 28,2 |
| 23 | Acrylsäure 3 ; 65,6 | Triethylenglykol-dimaleinat 1 ; 32,6 | Tetraethylen-diacrylat 0,05 ; 1,6 | Mercapto-ethanol 5 | 360 | 30,4 |
| 24 | Acrylsäure 4 ; 71,4 | $PEG_{300}$-Dimaleinat 1,5; 26,8 | $PEG_{1500}$-Diacrylat 0,1 ; 1,8 | Hydroxyl-ammonium-sulfat 8 | 660 | 16,1 |

$PEG_X$ = Polyethylenglykol eines mittleren Molekulargewichts von X

## Patentansprüche

1. Verfahren zur Herstellung von wasserlöslichen Polymerisaten mit K-Werten von 5 bis 100 (bestimmt am Na-Salz der Polymerisate nach H. Fikentscher in wäßriger Lösung bei 25 °C, einem pH-Wert von 7 und einer Polymerkonzentration des Na-Salzes von 1 Gew.%) durch Polymerisieren von Monomermischungen aus

(a) monoethylenisch ungesättigten $C_3$ – bis $C_6$ – Monocarbonsäuren und

(b) Monomeren, die mindestens zwei ethylenisch ungesättigte, über mindestens eine Ester – oder Amidfunktion verbundene Doppelbindungen aufweisen und die mindestens eine – CO – OX – Gruppe enthalten, in der X ein Wasserstoff –, ein Alkalimetall – oder ein Erdalkalimetalläquivalent oder eine Ammoniumgruppe bedeutet,

in wäßriger Lösung in Gegenwart von Polymerisationsinitiatoren bei Temperaturen bis zu 200 ° C, dadurch gekennzeichnet, daß man Monomermischungen, die mehr als 20 bis 100 Mol% (b) enthalten, in Gegenwart von bis zu 50 Gew.% Polymerisationsinitiatoren, bezogen auf die eingesetzten Monomeren, polymerisiert.

**2.** Verfahren nach Anspruch 1, dadurch gekennzeichnet, daß man Monomermischungen polymerisiert, die zusätzlich Monomere aus den Gruppen

(c) 0 bis 79,9 Mol% monoethylenisch ungesättigte $C_4$ – bis $C_6$ – Dicarbonsäuren,

(d) 0 bis 20 Mol% Hydroxyalkylester mit 2 bis 6 C – Atomen in der Hydroxyalkylgruppe von monoethylenisch ungesättigten $C_3$ – bis $C_6$ – Carbonsäuren,

(e) 0 bis 30 Mol% anderen, mit den Monomeren der Gruppen (a) bis (d) copolymerisierbaren, wasserlöslichen, monoethylenisch ungesättigten Monomeren, und

(f) 0 bis 10 Mol% an Monomeren, die mindestens zwei ethylenisch ungesättigte nicht konjugierte Doppelbindungen aufweisen und von den Monomeren (b) verschieden sind,

enthalten, wobei die Summe der Angaben in Mol% für (a) bis (f) immer 100 beträgt und mindestens eine der Komponenten (c) bis (f) zu 0,1 Mol% in den Monomermischungen enthalten ist.

**3.** Verfahren nach den Ansprüchen 1 und 2, dadurch gekennzeichnet, daß man Monomermischungen aus

a) 79,9 bis 10 Mol% Acrylsäure und/oder Methacrylsäure,

b) 20,1 bis 90 Mol% einer Verbindung der Formel

$$XOOC-CH=CH-CO-O-(CH_2-CH_2-O)_n-CO-CH=CH-COOX \quad (I),$$

in der X = H, Alkalimetall oder Ammoniumgruppe und n = 1 bis 120 bedeutet, und

c) 0 bis 69,9 Mol% Maleinsäure

in Gegenwart von bis zu 30 Gew.% Polymerisationsinitiatoren, bezogen auf die eingesetzten Monomeren, polymerisiert.

**4.** Verfahren nach den Ansprüchen 1 und 2, dadurch gekennzeichnet, daß man Monomermischungen aus

a) 79,9 bis 10 Mol% Acrylsäure und/oder Methacrylsäure,

b) 20,1 bis 90 Mol% einer Verbindung der Formel

$$XOOC-CH=CH-CO-NH-CH_2-(CH_2)_n-CH_2-NH-CO-CH=CH-COOX \quad (II),$$

in der X = H, Alkalimetall oder eine Ammoniumgruppe und n = 0 bis 4 bedeutet, und

c) 0 bis 69,9 Mol% Maleinsäure,

in Gegenwart von bis zu 30 Gew.% Polymerisationsinitiatoren, bezogen auf die eingesetzten Monomeren, polymerisiert.

**5.** Verwendung der nach den Ansprüchen 1 bis 4 erhältlichen Polymerisate als Zusatz zu Wasch – und Reinigungsmitteln in Mengen von 0,5 bis 25 Gew.%.

## Claims

**1.** A process for the preparation of a water – soluble polymer having a K value of from 5 to 100 (determined on the Na salt of the polymer according to H. Fikentscher in aqueous solution at 25 ° C, a pH of 7 and a concentration of 1% by weight of the Na salt of the polymer) by polymerizing a monomer mixture of

(a) monoethylenically unsaturated $C_3$ – $C_6$ – monocarboxylic acids and

(b) monomers which contain two or more ethylenically unsaturated double bonds linked via one or more ester or amide functions and which possess one or more – CO – OX groups, where X is one hydrogen equivalent, one alkali metal equivalent or one alkaline earth metal equivalent or an

ammonium group,

in aqueous solution in the presence of a polymerization initiator at not more than 200 °C, wherein a monomer mixture which contains more than 20 – 100 mol % of (b) is polymerized in the presence of not more than 50% by weight, based on the monomers used, of a polymerization initiator.

**2.** A process as claimed in claim 1, wherein the monomer mixture polymerized additionally contains monomers from the groups

(c) from 0 to 79.9 mol % of monoethylenically unsaturated $C_4 - C_6$ – dicarboxylic acids,

(d) from 0 to 20 mol % of hydroxyalkyl esters, where the hydroxyalkyl group is of 2 to 6 carbon atoms, of monoethylenically unsaturated $C_3 - C_6$ – carboxylic acids,

(e) from 0 to 30 mol % of other water – soluble, monoethylenically unsaturated monomers copolymerizable with monomers of groups (a) to (d), and

(f) from 0 to 10 mol % of monomers which have two or more ethylenically unsaturated noncon – jugated double bonds and differ from the monomers (b),

the sum of the mol % for (a) to (f) always being 100 and one or more of the components (c) to (f) being present in the monomer mixture in an amount of 0.1 mol %.

**3.** A process as claimed in claim 1 or 2, wherein a monomer mixture of

a) from 79.9 to 10 mol % of acrylic acid and/or methacrylic acid,

b) from 20.1 to 90 mol % of a compound of the formula

$$XOOC-CH=CH=CO-O(CH_2-CH_2-O)_n-CO-CH=CH-COOX \quad (I)$$

where X is H, an alkali metal or an ammonium group and n is from 1 to 120, and

c) from 0 to 69.9 mol % of maleic acid

are polymerised, in the presence of not more than 30% by weight, based on the monomers used, of a polymerization initiator.

**4.** A process as claimed in claim 1 or 2, wherein a monomer mixture of

a) from 79.9 to 10 mol % of acrylic acid and/or methacrylic acid,

b) from 20.1 to 90 mol % of a compound of the formula

$$XOOC-CH=CH-CO-NH-CH_2-(CH_2)_n-CH_2-NH-CO-CH=CH-COOX \quad (II)$$

where X is H, an alkali metal or an ammonium group and n is from 0 to 4, and

c) from 0 to 69.9 mol % of maleic acid

is polymerized in the presence of not more than 30% by weight, based on the monomers used, of a polymerization initlator.

**5.** Use of a polymer obtainable as claimed in any of claims 1 to 4 as an additive in detergents and cleaners in amounts of from 0.5 to 25 % by weight.

**Revendications**

**1.** Procédé de préparation de polymères solubles dans l'eau, qui possèdent des valeurs K de 5 à 100 (déterminées sur le sel de sodium des polymères selon H. Fikentscher en solution aqueuse, à 25 °C, un pH de 7 et une concentration en polymère du sel de sodium de 1% en poids) par la polymérisation de mélanges de monomères constitués

(a) d'acides monocarboxyliques en $C_3$ à $C_6$, à insaturation monéthylénique et

(b) de monomères qui présentent au moins deux doubles liaisons éthyléniquement insaturées, liées par l'intermédiaire d'au moins une fonction ester ou amide et qui contiennent au moins un groupe – CO – OX dans lequel X représente un équivalent d'hydrogène, de métal alcalin ou de métal alcalino – terreux, ou un groupe ammonium,

en solution aqueuse et en présence d'amorceurs de polymérisation, à des températures allant jusqu'à 200 °C, caractérisé en ce que l'on polymérise des mélanges de monomères qui contiennent plus de 20 à 100% molaires de (b), en présence de jusqu'à 50% en poids d'amorceurs de polymérisation, par rapport aux monomères mis en oeuvre.

**2.** Procédé suivant la revendication 1, caractérisé en ce que l'on polymérise des mélanges de monomères qui contiennent complémentairement des monomères appartenant aux groupes suivants :

(c) 0 à 79,9% molaires d'acides dicarboxyliques en $C_4$ à $C_6$, à insaturation monoéthylénique,

(d) 0 à 20% molaires d'esters hydroxyalkyliques dont le radical hydroxyalkyle comporte de 2 à 6 atomes de carbone d'acides carboxyliques en $C_3$ à $C_6$, à insaturation monoéthylénique,

(e) 0 à 30% molaires d'autres monomères à insaturation monoéthylénique, solubles dans l'eau, copolymérisables avec les monomères appartenant aux groupes (a) à (d) et

(f) 0 à 10% molaires de monomères qui présentent au moins deux doubles liaisons éthyléniquement insaturées et non conjuguées et qui diffèrent des monomères (b),

où la somme des indications en pourcent molaires pour (a) à (f) est toujours égale à 100 et au moins l'un des composants (c) à (f) est inclus à raison de jusqu'à 0,1% molaire dans les mélanges de monomères.

**3.** Procédé selon les revendications 1 et 2, caractérisé en ce que polymérise des mélanges de monomères constitués de

a) 79,9 à 10% molaires d'acide acrylique et/ou d'acide méthacrylique,

b) 20,1 à 90% molaires d'un composé répondant à la formule suivante

$$XOOC-CH=CH-CO-O-(CH_2-CH_2-O)_n-CO-CH=CH-COOX \quad (I),$$

dans laquelle X représente un atome d'hydrogène, de métal alcalin ou le radical ammonium et n possède une valeur qui varie de 1 à 120 et

c) 0 à 69,9% molaires d'acide maléique,

en présence de jusqu'à 30% en poids d'amorceurs de polymérisation, par rapport aux monomères mis en oeuvre.

**4.** Procédé selon les revendications 1 et 2, caractérisé en ce que l'on polymérise des mélanges de monomères constitués de

a) 79,9 à 10% molaires d'acide acrylique et/ou d'acide méthacrylique,

b) 20,1 à 90% molaires d'un composé répondant à la formule suivante

$$XOOC-CH=CH-CO-NH-CH_2-(CH_2)_n-CH_2-NH-CO-CH=CH-COOX \quad (II),$$

dans laquelle X représente un atome d'hydrogène, de métal alcalin ou le radical ammonium et n a une valeur qui varie de 0 à 4 et

c) 0 à 69,9% molaires d'acide maléique,

en présence de jusqu'à 30% en poids d'amorceurs de polymérisation, par rapport aux monomères mis en oeuvre.

**5.** Utilisation des polymères que l'on peut obtenir selon les revendications 1 à 4 à titre d'additifs dans des détergents et des compositions de lessivage ou de nettoyage en proportions de 0,5 à 25% en poids.